(19) **Europäisches Patentamt**

**European Patent Office**

**Office européen des brevets**

(11) **EP 1 332 607 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(21) Anmeldenummer: **01994020.4**

(22) Anmeldetag: **11.10.2001**

(51) Int Cl.⁷: **H04M 15/28**, H04Q 1/42

(86) Internationale Anmeldenummer:
**PCT/DE2001/003890**

(87) Internationale Veröffentlichungsnummer:
**WO 2002/039711 (16.05.2002 Gazette 2002/20)**

(54) **AUSWERTESCHALTUNG FÜR WECHSELSPANNUNGSIMPULSE**

EVALUATION CIRCUIT FOR ALTERNATING VOLTAGE PULSES

CIRCUIT D'EVALUATION POUR IMPULSIONS DE COURANT ALTERNATIF

(84) Benannte Vertragsstaaten:
**DE FI FR GB SE**

(30) Priorität: **08.11.2000 DE 10055375**

(43) Veröffentlichungstag der Anmeldung:
**06.08.2003 Patentblatt 2003/32**

(73) Patentinhaber: **Infineon Technologies AG**
**81669 München (DE)**

(72) Erfinder:
• **HAUSER, Thomas**
**81825 München (DE)**

• **KRANZ, Christian**
**40885 Ratingen Lintorf (DE)**
• **HÜRTGEN, Frank**
**40237 Düsseldorf (DE)**

(74) Vertreter: **Lange, Thomas et al**
**Patentanwälte**
**Lambsdorff & Lange**
**Dingolfinger Strasse 6**
**81673 München (DE)**

(56) Entgegenhaltungen:
**US-A- 4 479 188     US-A- 4 617 427**
**US-A- 4 698 769     US-A- 6 067 329**

**Beschreibung**

Die Erfindung betrifft eine Schaltung zur Detektion von Wechselspannungsimpulsen definierter Frequenz, ein Fernsprechgerät mit einer derartigen Schaltung sowie ein Verfahren zur Erkennung von Wechselspannungsimpulsen definierter Frequenz.

Im europäischen analogen Telefonnetz werden Gebühreneinheitenimpulse an die Teilnehmer-Endgeräte übermittelt, um auf Teilnehmerseite eine Erfassung der aufgelaufenen Gebühren zu ermöglichen. Bei den Gebühreneinheitenimpulsen handelt es sich um kurze Wechselspannungsimpulse mit einer Frequenz von 16 kHz bzw. in einigen Ländern von ca. 12 kHz. Diese Gebührenimpulse müssen in der Teilnehmereinrichtung erkannt und gezählt werden.

Ursprünglich wurden die Gebühreneinheitensignale mittels eines Bandpasses aus dem Empfangspfad ausgekoppelt und einem mechanischen Zählwerk zugeführt, das bei jedem Puls einen Schritt weiter zählte. Modernere Lösungen sehen vor, die Gebühreneinheitensignale aus dem für die Audio-Signalverarbeitung vorgesehenen Empfangspfad auszukoppeln und mittels eines Bandpasses zu filtern. Anschließend werden die Gebühreneinheitensignale durch einen Komparator in Rechtecksignale gewandelt, deren Periodendauer digital durch Zähler ermittelt wird. Falls die digital erfasste Länge des Gebührenpulses innerhalb eines vordefinierten Toleranzbereichs liegt, wird ein Gebührenpuls registriert.

Nachteilig an dieser Lösung ist der relativ hohe Bedarf an diskreten Bauelementen für die Auskopplung und Bandpass-Filterung der Gebühreneinheitensignale. Diskrete Bauelemente sind teuer und behindern eine weitere Miniaturisierung der Teilnehmer-Endgeräte.

US-A-4 698 769 beschreibt ein Verfahren bei dem das die Impulse enthaltende Signal in eine Komplexe Zahlenfolge Konvertiert wird, diese gemittelt und dann einer Frequenzanalyse unterzogen werden.

Aufgabe der Erfindung ist es daher, eine Detektionsschaltung für Wechselspannungsimpulse definierter Frequenz sowie ein Verfahren zur Erkennung von derartigen Wechselspannungsimpulsen zu schaffen, wobei der Aufwand an diskreten Bauelementen weiter reduziert wird.

Die Aufgabe der Erfindung wird durch eine Schaltung zur Detektion von Wechselspannungsimpulsen definierter Frequenz gemäß Anspruch 1, durch ein Fernsprechgerät gemäß Anspruch 11 sowie durch ein Verfahren zur Erkennung von Wechselspannungsimpulsen gemäß Anspruch 15 gelöst.

Die erfindungsgemäße Detektionsschaltung umfasst eine Analog/Digital-Wandlereinheit zur Umwandlung des Eingangssignals in eine Folge von Abtastwerten. Die Folge der Abtastwerte wird durch mindestens eine Mischstufe mit einem Mischfrequenzsignal multipliziert. Darüber hinaus weist die Detektionsschaltung mindestens eine Filterstufe zur Festlegung des erlaubten Zwischenfrequenzbands auf. Mittels einer Auswerteeinheit wird anhand der umgeformten Abtastwerte ermittelt, ob ein Wechselspannungsimpuls vorliegt.

Anders als im Stand der Technik wird der ankommende Wechselspannungsimpuls zuerst digitalisiert; die weitere Verarbeitung erfolgt dann in digitaler Form. Sowohl die Mischstufe bzw. die Mischstufen als auch die Filterstufe bzw. die Filterstufen sind als Digitalschaltungen bzw. mittels eines digitalen Signalprozessors realisiert.

Um eine frequenzspezifische Detektion der Wechselspannungsimpulse zu ermöglichen, wird das Superheterodyn-Prinzip verwendet. Hierzu werden die Abtastwerte des Eingangssignals mit einem Mischfrequenzsignal der Frequenz $\omega_M$ multipliziert. Ein Wechselspannungsimpuls mit der Frequenz $\omega_0$ wird dadurch einerseits auf die Frequenz $\omega_0 + \omega_M$ hochgemischt und zum anderen auf die Frequenz $\omega_0 - \omega_M$ heruntergemischt. Durch eine nachfolgend angeordnete Filterstufe wird das erlaubte Zwischenfrequenzband und somit der Toleranzbereich für die Frequenz des Wechselspannungsimpulses festgelegt. Beispielsweise kann der hochgemischte Anteil $\omega_0 + \omega_M$ durch einen Tiefpassfilter unterdrückt werden.

Mittels eines Tiefpassfilters ist es auch möglich, den erlaubten Zwischenfrequenzbereich für den heruntergemischten Anteil $\omega_0 - \omega_M$ festzulegen, denn bei einer Grenzfrequenz $\omega_G$ gilt $|\omega_0 - \omega_M| \leq \omega_G$ und somit $\omega_M - \omega_G \leq \omega_0 \leq \omega_M + \omega_G$. Anstelle eines Tiefpassfilters kann zur Definition des erlaubten Zwischenfrequenzbands auch ein Filter mit einer anderen Filtercharakteristik, beispielsweise ein Bandpass, eingesetzt werden.

Das zu detektierende Wechselspannungs-Signal wird also zuerst in den Zwischenfrequenzbereich herabgemischt, und anschließend wird der Frequenzbereich, innerhalb dessen eine Detektion von Wechselspannungsimpulsen erfolgen soll, durch Begrenzung des Zwischenfrequenzbands definiert. Die Auswerteeinheit ermittelt sodann anhand der umgeformten Abtastwerte, ob in dem so definierten Frequenzfenster ein Wechselspannungsimpuls aufgetreten ist.

Durch die erfindungsgemäße Verwendung des Superheterodyn-Prinzips zur Detektion von Wechselspannungsimpulsen definierter Frequenz kann auf diskret aufgebaute Filteranordnungen verzichtet werden. Die Signalverarbeitung erfolgt vollständig digital und kann durch digitale Signalprozessoren erfolgen, was eine platzsparende und kostengünstige Implementierung der Auswerteschaltung ermöglicht.

Gemäß einer vorteilhaften Ausführungsform der Erfindung weist die Schaltung zur Detektion von Wechselspannungsimpulsen mindestens eine Dezimationsstufe auf, welche die Signalrate durch Auslassen von Abtastwerten verringert. Derartige Dezimationsstufen ermöglichen eine schrittweise Absenkung der Samplingrate für die Abtastwerte; die eigentliche Signalverarbeitung kann dann bei einer geringeren Abtastfrequenz erfolgen. Dadurch steht für die Signalverarbeitung pro Abtastwert mehr Verarbeitungszeit zur Verfügung, und deshalb können die Anforderungen an die Performance des digitalen Signalprozessors bzw. der digitalen Auswerteschaltung abgesenkt werden. Ein weiterer Vorteil einer niedrigen Verarbeitungsfrequenz ist, dass die Leistungsaufnahme des DSP bzw. der Auswerteschaltung verringert wird.

Eine weitere vorteilhafte Ausführungsform der Erfindung sieht vor, dass die Mischstufe bzw. die Mischstufen jeweils einen Quadratur-Signalpfad sowie einen Inphase-Signalpfad aufweisen, wobei im Quadratur-Signalpfad eine Multiplikation der Folge der Abtastwerte mit dem Sinus-Signal der Mischfrequenz durchgeführt wird, und wobei im Inphase-Signalpfad eine Multiplikation der Folge der Abtastwerte mit dem Kosinus-Signal der Mischfrequenz durchgeführt wird.

Das Kosinus-Signal der Mischfrequenz, welches im Inphase-Signalpfad eingesetzt wird, ist relativ zu dem im Quadratur-Signalpfad verwendeten Sinus-Signal um 90° phasenverschoben. Dadurch kann ein am Eingang der Auswerteschaltung anliegendes Wechselspannungs-Signal unabhängig von seiner Phasenlage relativ zum Mischfrequenzsignal verarbeitet werden. Je nach Phasenlage des Eingangssignals liefert entweder der Quadratur-Signalpfad oder der Inphase-Signalpfad das stärkere Signal.

Dabei ist es insbesondere von Vorteil, wenn die Multiplikation mit dem Sinus-Signal der Mischfrequenz durch Multiplikation der Folge der Abtastwerte mit der Folge 0, 1, 0, -1, 0,... erfolgt. Diese Wertefolge entspricht dem Verlauf des Sinus-Signals der Mischfrequenz für den Fall, dass als Abtastfrequenz das Vierfache der Mischfrequenz gewählt wird. Bei einer Mischfrequenz von 16 kHz muss die Abtastfrequenz daher zu 64 kHz gewählt werden. Die Multiplikation der Folge der Abtastwerte mit der Folge 0, 1, 0, -1, 0, ... kann in einfacher Weise dadurch durchgeführt werden, dass jeder zweite Abtastwert gleich Null gesetzt wird und jeder vierte Abtastwert invertiert wird. Die Multiplikation der Folge der Abtastwerte mit der Folge 0, 1, 0, -1, 0, ... kann in einfacher Weise mit einem Dezimationsschritt verbunden werden, indem zuerst jeder zweite Abtastwert weggelassen wird. Anschließend wird jeder zweite Abtastwert der verbliebenen Abtastwerte invertiert.

Entsprechend kann die Multiplikation mit dem Kosinus-Signal der Mischfrequenz durch Multiplikation der Folge der Abtastwerte mit der Folge 1, 0, -1, 0, 1, ... erfolgen, wenn die Abtastfrequenz viermal so groß wie die Mischfrequenz ist. Dadurch wird der Phasenverschiebung von 90° zwischen Sinus- und Kosinus-Signal Rechnung getragen.

Es ist von Vorteil, wenn die Auswerteeinheit die umgeformten Abtastwerte des Quadratur-Signalpfads und des Inphase-Signalpfads jeweils quadriert, addiert und mit einem Schwellwert vergleicht. Wenn der Wechselspannungsimpuls die diversen Misch- und Filterstufen passiert hat, kann durch Quadrieren und Addieren der umgeformten Abtastwerte des Quadratur-Signalpfads sowie des Inphase-Signalpfads das Betragsquadrat des Signals erhalten werden. Wegen der Aufteilung des Signalpfads in einen Quadratur-Signalpfad und in einen Inphase-Signalpfad erhält man unabhängig von der Phasenlage des Eingangssignals relativ zum Mischsignal stets dasselbe Betragsquadrat.

Für den Fall, dass der Wechselspannungspuls innerhalb des zugelassenen Toleranzbereichs liegt und die verschiedenen Misch- und Filterstufen passiert, wird der in der Auswerteeinheit festgelegte Schwellwert überschritten und dies bedeutet, dass ein Wechselspannungspuls eines bestimmten Typs empfangen wurde. Wenn dagegen die Frequenz des Wechselspannungsimpulses nicht innerhalb des vordefinierten Frequenzfensters liegt, dann wird das Signal durch die Misch- und Filterstufen so stark abgeschwächt, dass das Betragsquadrat des Signals unterhalb des Schwellwerts liegt.

Es ist von Vorteil, wenn die Mischstufe die Folge der Abtastwerte mit einem Mischfrequenzsignal multipliziert, dessen Frequenz der Frequenz der zu detektierenden Wechselspannungsimpulse entspricht. Durch das Mischfrequenzsignal $\omega_M$ wird ein Wechselspannungsimpuls mit der Frequenz $\omega_0$ auf die Frequenz $\omega_0 - \omega_M$ heruntergemischt. Wenn die Frequenz des Mischsignals der Frequenz der zu detektierenden Wechselspannungsimpulse entspricht, dann wird das eingangs anliegende Wechselspannungs-Signal auf 0 Hz bzw. auf eine sehr niedrige Frequenz heruntergemischt.

Diese heruntergemischte Signal kann in einfacherer Art und Weise weiterverarbeitet werden als das ursprüngliche höherfrequente Signal. Entsprechend dem Nyquist-Theorem kann das heruntergemischte Signal durch relativ niedrige Abtastraten erfasst werden. Das Heruntermischen des Eingangssignals ermöglicht insofern eine Absenkung der Abtastfrequenz. Ein weiterer Vorteil ist, dass das heruntergemischte niederfrequente Signal durch eine Tiefpassstufe bandbegrenzt werden kann, um auf diese Weise das erlaubte Frequenzfenster für das eingangs anliegende Wechselspannungs-Signal zu definieren. Dieses Frequenzfenster erstreckt sich von $\omega_M - \omega_G$ bis $\omega_M + \omega_G$, wobei $\omega_M$ die Mischfrequenz und $\omega_G$ die Grenzfrequenz des Tiefpasses bezeichnet.

Gemäß einer weiteren vorteilhaften Ausführungsform der Erfindung weist die Schaltung eine erste Mischstufe auf, welche die Folge der Abtastwerte mit einem ersten Mischfrequenzsignal multipliziert, dessen Frequenz der Frequenz eines ersten Typs von Wechselspannungsimpulsen entspricht. Des weiteren weist die Schaltung eine zwischen der ersten Mischstufe und der Auswerteeinheit angeordnete zweite Mischstufe auf, welche die Folge der Abtastwerte mit einem zweiten Mischfrequenzsignal multipliziert. Die Frequenz des zweiten Mischfrequenzsignals entspricht der Differenz der Frequenzen des ersten Typs und eines zweiten Typs von Wechselspannungsimpulsen.

Ein am Eingang anliegender Wechselspannungsimpuls des ersten Typs wird durch die erste Mischstufe auf eine Frequenz von 0 Hz bzw. auf eine sehr niedrige Frequenz heruntergemischt und kann anschließend durch einen ersten Detektionspfad weiter verarbeitet werden. Wenn am Eingang der ersten Mischstufe jedoch ein Wechselspannungsimpuls des zweiten Typs anliegt, dann wird dieser Wechselspannungsimpuls auf eine Frequenz herabgemischt, die der Differenzfrequenz des ersten und des zweiten Typs von Wechselspannungsimpulsen entspricht. Dieses Signal wird der nachfolgend angeordneten zweiten Mischstufe zugeführt, deren Mischfrequenz genau dieser Differenzfrequenz entspricht. Insofern mischt die zweite Mischstufe das anliegende Differenzfrequenzsignal auf 0 Hz bzw. auf eine sehr niedrige Frequenz herunter. Das am Ausgang der zweiten Mischstufe anliegende Signal wird durch den zweiten Detektionspfad weiter verarbeitet. Sowohl im ersten Detektionspfad (für den ersten Typ von Wechselspannungsimpulsen) als auch im zweiten Detektionspfad (für den zweiten Typ von Wechselspannungsimpulsen) können Filterstufen angeordnet sein, um jeweils die erlaubten Frequenzbereiche für den ersten Typ und den zweiten Typ von Wechselspannungsimpulsen festzulegen.

Insbesondere ist es von Vorteil, wenn zwischen der ersten Mischstufe und der zweiten Mischstufe eine Tiefpassstufe angeordnet ist, deren Grenzfrequenz oberhalb der Differenzfrequenz liegt. Am Ausgang der zweiten Mischstufe liegt nicht nur das heruntergemischte Signal $\omega_0 - \omega_M$, sondern auch ein hochgemischtes Signal der Frequenz $\omega_0 + \omega_M$ an. Durch die zwischen der ersten Mischstufe und der zweiten Mischstufe angeordnete Tiefpassstufe wird dieser hochgemischte Signalanteil unterdrückt, da er für die weitere Signalverarbeitung nicht benötigt wird.

Es ist insbesondere von Vorteil, die erfindungsgemäße Schaltung zur Detektion der Gebühreneinheitsignale des Fernsprechnetzes einzusetzen. Bei den Gebühreneinheitsignalen handelt es sich um kurze Wechselspannungsimpulse mit einer definierten Frequenz von ca. 16 kHz bzw. in einigen Ländern von ca. 12 kHz. Wenn die erfindungsgemäße Detektionsschaltung ausschließlich für die Verarbeitung von 16 kHz-Impulsen ausgelegt wird, dann genügt eine einzige Mischstufe mit einer Mischfrequenz von 16 kHz, um das Eingangssignal auf niedrige Frequenzen herabzumischen. Entsprechend genügt zur Detektion von 12 kHz-Impulsen eine mit einer Mischfrequenz von 12 kHz betriebene Mischstufe. Sollen dagegen mit einer einzigen Detektionsschaltung sowohl die 12 kHz- als auch die 16 kHz-Impulse detektiert werden können, so kann das Eingangssignal zunächst durch eine erste Mischstufe, welche mit einer Mischfrequenz von 16 kHz betrieben wird, auf 0 Hz (für den Fall eines 16 kHz-Signals) bzw. auf 4 kHz (für den Fall eines 12kHz-Signals) heruntergemischt werden. Das auf 0 Hz heruntergemischte 16 kHz-Signal kann sofort ausgewertet werden. Das auf 4 kHz heruntergemischte 12 kHz-Signal kann durch eine zweite Mischstufe, die mit einer Mischfrequenz von 4 kHz betrieben wird, ebenfalls auf 0 Hz heruntergemischt und dann ausgewertet werden.

Die erfindungsgemäße Detektionsschaltung für Wechselspannungsimpulse definierter Frequenz eignet sich insbesondere zum Einsatz in einem Fernsprechgerät, um die über das Fernsprechnetz übertragenen Gebühreneinheitensignale zu erfassen. Ein mit der erfindungsgemäßen Detektionsschaltung ausgestattetes Fernsprechgerät kann an sämtliche in Europa verwendeten Standards für Gebühreneinheitensignale angepasst werden. Die Herstellungskosten sind dabei geringer als bei bisherigen Lösungen.

Dabei ist es insbesondere von Vorteil, wenn die Gebühreneinheitensignale über den Sprachpfad, über den auch die Audio-Signalverarbeitung erfolgt, detektiert werden. Anders als bei bisherigen Lösungen müssen die Gebühreneinheitenimpulse nicht aus dem Sprachpfad ausgekoppelt werden, und diskret aufgebaute Filteranordnungen sind bei der erfindungsgemäßen Lösung überflüssig.

Insbesondere ist es von Vorteil, wenn die Gebühreneinheitensignale durch die Analog/Digital-Wandlereinheit des Sprachpfads digitalisiert werden. Moderne Telefone weisen eine Analog/Digital-Wandlereinheit auf, die das ankommende Audiosignal in digitale Abtastwerte umwandelt. Bei der erfindungsgemäßen Lösung übernimmt diese Analog/Digital-Wandlereinheit zusätzlich die Aufgabe, die ankommenden Gebühreneinheitensignale zu digitalisieren. Für die Analog/Digital-Wandlung der Gebühreneinheitensignale wird daher kein separater Analog/Digital-Wandlerbaustein benötigt.

Insbesondere ist es von Vorteil, die verschiedenen Verarbeitungsstufen zur Umformung der Folge von Abtastwerten mittels eines oder mehrerer digitaler Signalprozessoren zu realisieren. Die zur Auswertung der Gebühreneinheitensignale erforderlichen Mischstufen, Filterstufen und Dezimationsstufen können vollständig mit Hilfe von digitalen Signalprozessoren implementiert werden. Auch die Auswerteeinheit, in der die Abtastwerte quadriert und aufsummiert werden, lässt sich mit einem digitalen Signalprozessor realisieren.

Bei dem erfindungsgemäßen Verfahren zur Erkennung verschiedener Typen von Wechselspannungsimpulsen von jeweils definierter Frequenz wird in einem ersten Schritt das Eingangssignal digitalisiert. Die so erhaltene Folge von digitalisierten Abtastwerten wird anschließend umgeformt, indem verschiedene Schritte des Multiplizierens der Folge von Abtastwerten mit vorgegebenen Mischfrequenzsignalen sowie des Filterns der Folge von Abtastwerten durchgeführt werden. Durch das Filtern der Folge von Abtastwerten wird das erlaubte Zwischenfrequenzband festgelegt. Anhand der Folge von umgeformten Abtastwerten kann dann ermittelt werden, ob ein bestimmter Typ von Wechselspannungsimpuls vorliegt.

Das erfindungsgemäße Verfahren erlaubt eine vollständig digitale, selektive Erkennung verschiedener Typen von Wechselspannungsimpulsen. Bei dem erfindungsgemäßen Verfahren wird das Eingangssignal durch Multiplizieren mit verschiedenen Mischfrequenzsignalen auf niedrige Frequenzen heruntergemischt. Dies hat zum einen den Vorteil, dass die Filterung des Signals im niederfrequenten Zwischenfrequenzband wesentlich einfacher bewerkstelligt werden kann als im ursprünglichen Frequenzbereich des Eingangssignals. Ein weiterer Vorteil ist, dass nach Transformation des Eingangssignals in den niederfrequenten Bereich mit wesentlich geringeren Signalraten gearbeitet werden kann. Dies bedeutet, dass Signalprozessoren mit niedrigerer Performance eingesetzt werden können, und dass die Leistungsaufnahme der Schaltung abgesenkt wird.

Nachfolgend wird die Erfindung anhand eines in der Zeichnung dargestellten Ausführungsbeispiels weiter beschrieben. Es zeigt:

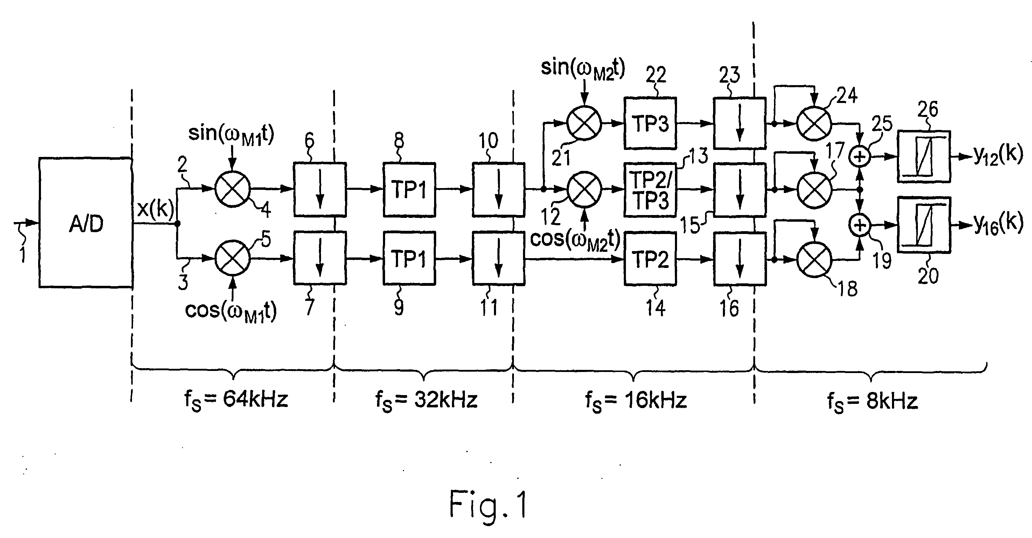

Fig. 1      eine erfindungsgemäße Detektionsschaltung für Gebühreneinheitensignale, welche sowohl 16 kHz- als auch 12 kHz-Signale detektieren kann.

Die in Fig. 1 dargestellte Detektionsschaltung für Wechselspannungsimpulse definierter Frequenz eignet sich insbesondere zur Erfassung der über das Telefonnetz übertragenen Gebühreneinheitensignale. Die erfindungsgemäße Schaltung und das erfindungsgemäße Detektionsprinzip ist aber nicht auf diesen Anwendungszweck beschränkt, sondern kann immer dann eingesetzt werden, wenn Kennungsimpulse von definierter Frequenz selektiv erfasst werden sollen.

Das analoge Eingangssignal 1 wird zunächst dem Analog/Digital-Wandler A/D zugeführt und in eine Folge digitaler Abtastwerte x(k) umgewandelt. Wenn die Schaltung in einem Fernsprechgerät zur Erfassung der Gebühreneinheitenimpulse eingesetzt wird, so werden die Gebühreneinheitensignale durch denselben Analog/Digital-Wandler digitalisiert, der auch das Sprachsignal in Digitalwerte umwandelt, denn bei der erfindungsgemäßen Lösung werden die Gebühreneinheitenimpulse nicht aus dem Sprachpfad ausgekoppelt.

Die digitalisierten Abtastwerte x(k) werden nun der ersten Mischstufe zugeführt und dazu in einen Quadratur-Signalpfad 2 und einen Inphase-Signalpfad 3 aufgeteilt. Im Mischer 4 des Quadratur-Signalpfads wird das Signal mit dem Sinus-Signal sin ($\omega_{M1}$· t) der Mischfrequenz $\omega_{M1}$ multipliziert, wobei $\omega_{M1} = \frac{1}{2\pi}$ · 16kHz gewählt wird und somit der Frequenz der 16 kHz-Gebühreneinheitenpulse entspricht.

Im Mischer 5 des Inphase-Signalpfads wird das Signal mit dem Kosinus-Signal cos($\omega_{M1}$ · t) der Mischfrequenz $\omega_{M1} = \frac{1}{2\pi}$ · 16 kHz multipliziert, also mit einem um 90° phasenverschobenen Mischsignal. Dadurch wird eine Detektion der Gebühreneinheitenpulse unabhängig von deren Phasenlage relativ zum den Mischfrequenzsignalen möglich.

Die Signalrate am Ausgang des Analog/Digital-Wandlers sowie in den Mischern 4 und 5 beträgt 64 kHz und somit das Vierfache der Mischfrequenz $f_{M1}$. Pro Takt der Mischfrequenz wird daher viermal abgetastet, und deshalb ergibt sich als Sinus-Signal der Mischfrequenz die Folge 0, 1, 0, -1, 0, ... (sin

$$\left(\frac{\pi \cdot k}{2}\right),$$

mit k = 0, 1, 2, ...). Entsprechend ergibt sich für das Kosinus-Signal der Mischfrequenz die Folge 1, 0, -1, 0, 1, ... (cos

$$\left(\frac{\pi \cdot k}{2}\right),$$

mit k = 0, 1, 2, ...). Aus der Multiplikation des Eingangssignals mit der Sinus-Folge im Mischer 4 ergibt sich daher eine Signalfolge, bei der jeder zweite Wert gleich Null gesetzt ist. Auch am Ausgang des Mischers 5 des Inphase-Signalpfads liegt eine Signalfolge an, bei der jeder zweite Wert gleich Null ist. In den sich anschließenden Dezimationsstufen 6 und 7 wird die Signalrate jeweils von $f_S$ = 64 kHz auf $f_S$= 32 kHz herabgesetzt, indem die nullgesetzten Werte der Signalfolge weggelassen werden.

An den Ausgängen der Mischer 4 und 5 erscheint jeweils ein hochgemischtes Signal, dessen Frequenz der Summe der Frequenzen des Eingangs- und des Mischsignals entspricht, sowie ein heruntergemischtes Signal, dessen Frequenz der Differenzfrequenz des Eingangs- und des Mischsignals entspricht. Ein 16 kHz-Puls wird durch die Mischfrequenz $f_{M1}$ = 16 kHz einerseits auf 32 kHz hochgemischt, und andererseits auf 0 kHz heruntergemischt (Superheterodyn-Prinzip). Entsprechend wird ein am Eingang der ersten Mischstufe anliegender 12 kHz-Puls durch die Mischfrequenz von 16 kHz einerseits auf 28 kHz hochgemischt und zum anderen auf 4 kHz heruntergemischt. Die Tiefpässe 8 und 9 (TP1) haben die Aufgabe, die hochgemischten Frequenzanteile wegzufiltern und nur den 0 kHz-Anteil des 16 kHz-Pulses sowie den 4 kHz-Anteil des 12 kHz-Pulses passieren zu lassen. Insofern ist es zweckmäßig, die Grenzfrequenz der Tiefpässe 8 und 9 (TP1) des Quadratur- sowie des Inphasepfades auf 4,5 kHz festzulegen. An die Tiefpässe 8 und 9 schließen sich die Dezimationsstufen 10 und 11 an, welche die Signalrate nochmals von $f_s$ = 32 kHz auf $f_s$ = 16 kHz heruntersetzen. Durch die wiederholte Absenkung der Signalrate kann die weitere Signalverarbeitung signifikant vereinfacht werden.

Im folgenden soll angenommen werden, dass die Detektionsschaltung für Gebühreneinheitenimpulse auf die Erkennung von 16 kHz-Pulsen eingestellt wurde. In diesem Fall ist es nicht notwendig, die am Ausgang der Dezimationsstufen 10 und 11 anliegenden Signale nochmals durch eine zweite Mischfrequenz herauf- oder herabzumischen, denn die 16 kHz-Pulse wurden bereits durch die Mischer 4 und 5 von 16 kHz auf 0 kHz heruntergemischt.

Der Mischer 12 ist daher inaktiv geschaltet bzw. multipliziert jeden anliegenden Wert mit 1. Die eigentliche Bandbegrenzung des heruntergemischten Signals wird durch die Tiefpassfilter 13 und 14 (TP2/TP3, TP2) vorgenommen. Die Tiefpassfilter 13, 14 dienen zur Festlegung des Zwischenfrequenzbands, innerhalb dessen eine Detektion von Wechselspannungspulsen erfolgen soll. Wird beispielsweise die Grenzfrequenz der Tiefpassfilter 13 und 14 zu 0,5 kHz festgesetzt, so können Wechselspannungen mit Frequenzen von -0,5 kHz bis +0,5 kHz die Tiefpassfilter passieren. Dem entspricht ein erlaubter Frequenzbereich von 15,5 kHz bis 16,5 kHz im Eingangssignal. Aus diesem Rechenbeispiel ergibt sich, dass sich durch Tiefpassfilterung der Zwischenfrequenzen der erlaubte Bandbereich für zu detektierende Wechselspannungsimpulse auf einfache Weise festlegen lässt.

In den sich anschließenden Dezimationsstufen 15 und 16 wird die Abtastfrequenz erneut halbiert (von $f_s$ = 16 kHz auf $f_s$ = 8 kHz), indem jeder zweite Signalwert weggelassen wird. Die übrig gebliebenen Signalwerte werden den Multiplizierern 17 und 18 zugeführt, die jeden Signalwert quadrieren. Der Addierer 19 bildet jeweils die Summe des quadrierten Quadratur- und Inphase-Signalwerts und ermittelt so das Betragsquadrat des jeweiligen Signalwerts, und zwar unabhängig von der Phasenlage des Eingangssignals. Der Schwellenwert-Entscheider 20 vergleicht das vom Addierer 19 gelieferte Resultat mit einem vorgegebenen Schwellenwert. Wenn dieser Schwellenwert überschritten ist, dann wird durch das Detektionssignal $y_{16}(k)$ des Schwellenwert-Entscheiders 20 angezeigt, dass ein 16 kHz-Puls empfangen wurde.

In einigen europäischen Ländern werden Gebühreneinheitenpulse mit einer Frequenz von ca. 12 kHz verwendet. Wenn die in Fig. 1 gezeigte Schaltung derartige 12 kHz-Pulse auswerten soll, dann muss neben der ersten Mischfrequenz $f_{M1}$ = 16 kHz zusätzlich eine zweite Mischfrequenz $f_{M2}$ = 4 kHz zum Einsatz kommen. Hierzu wird das am Ausgang der Dezimationsstufe 10 anliegende Quadratur-Signal, welches durch den Mischer 4 auf eine Zwischenfrequenz von 4 kHz heruntergemischt wurde, den Mischern 12 und 21 zugeführt. Die Mischer 12 und 21 multiplizieren das anliegende Signal mit der Sinus- bzw. Kosinus-Signalfolge zur Mischfrequenz $f_{M2}$ = 4 kHz.

Da die Samplingfrequenz $f_s$ hier 16 kHz und somit das Vierfache der Mischfrequenz beträgt, ergibt sich die Kosinus-Signalfolge wieder zu 1, 0, -1, 0, 1, ... ( cos

$$\left( \frac{\pi \cdot k}{2} \right),$$

mit k = 0, 1, 2, ...) und die Sinus-Folge zu 0, 1, 0, -1, 0, ... (sin

$$\left( \frac{\pi \cdot k}{2} \right),$$

mit k = 0, 1, 2, ...).

Durch Multiplikation mit einem Mischfrequenzsignal der Frequenz 4 kHz wird erreicht, dass das an den Mischern 12 und 21 anliegende Zwischenfrequenz-Signal zum einen auf 8 kHz hochgemischt und zum anderen auf 0 kHz herabgemischt wird. Die nachfolgend im Signalpfad angeordneten Tiefpassfilter 13 und 22 (TP2/TP3, TP3) eliminieren zum einen den hochgemischten 8 kHz-Anteil. Andererseits wird hinsichtlich des auf 0 kHz heruntergemischten Signalanteils durch die Grenzfrequenz der Tiefpassfilter 13 und 22 der erlaubte Zwischenbandbereich festgelegt, innerhalb dessen eine Pulsdetektion erfolgt.

Die nachfolgend angeordneten Dezimierer 15 und 23 halbieren die Signalrate von $f_s$ = 16 kHz auf $f_s$ = 8 kHz, indem jeder zweite Abtastwert weggelassen wird. Die Auswertung erfolgt durch die Multiplizierer 17 und 24, durch den Addierer 25, sowie durch den Schwellenwert-Entscheider 26. Wenn die Summe der quadrierten Signalwerte eine vorgegebene Schwelle überschreitet, dann liegt ein 12 kHz-Puls vor. Dies wird durch das am Ausgang des Schwellenwert-Entscheiders 26 anliegende Detektionssignal $y_{12}(k)$ angezeigt.

**Patentansprüche**

1. Schaltung zur Detektion von Wechselspannungsimpulsen definierter Frequenz, welche aufweist

   - eine Analog/Digital-Wandlereinheit (A/D) zur Umwandlung eines Eingangssignals (1) in eine Folge von Abtastwerten (x (k)),
   - mindestens eine Mischstufe (4, 5 sowie 12, 21), welche die Folge der Abtastwerte (x(k)) mit einem Mischfrequenzsignal multipliziert,
   - mindestens eine Filterstufe (13, 14, 22) zur Festlegung des erlaubten Zwischenfrequenzbands, sowie
   - eine Auswerteeinheit, welche anhand der umgeformten Abtastwerte ermittelt, ob ein Wechselspannungsimpuls vorliegt.

**2.** Schaltung nach Anspruch 1,
**dadurch gekennzeichnet,**
**dass** die Schaltung mindestens eine Dezimationsstufe (6, 7, 10, 11, 15, 16, 23) aufweist, welche die Signalrate ($f_s$) durch Auslassen von Abtastwerten verringert.

**3.** Schaltung nach Anspruch 1 oder Anspruch 2,
**dadurch gekennzeichnet,**
**dass** die Mischstufe bzw. die Mischstufen (4, 5 sowie 12, 21) jeweils einen Quadratur-Signalpfad (2) sowie einen Inphase-Signalpfad (3) aufweisen, wobei im Quadratur-Signalpfad (2) eine Multiplikation der Folge der Abtastwerte mit dem Sinus-Signal der Mischfrequenz durchgeführt wird, und wobei im Inphase-Signalpfad (3) eine Multiplikation der Folge der Abtastwerte mit dem Kosinus-Signal der Mischfrequenz durchgeführt wird.

**4.** Schaltung nach Anspruch 3,
**dadurch gekennzeichnet,**
**dass** die Multiplikation mit dem Sinus-Signal der Mischfrequenz durch Multiplikation der Folge der Abtastwerte mit der Folge 0, 1, 0, -1, 0, ... erfolgt.

**5.** Schaltung nach Anspruch 3 oder Anspruch 4,
**dadurch gekennzeichnet,**
**dass** die Multiplikation mit dem Kosinus-Signal der Mischfrequenz durch Multiplikation der Folge der Abtastwerte mit der Folge 1, 0, -1, 0, 1, ... erfolgt.

**6.** Schaltung nach einem der Ansprüche 3 bis 5,
**dadurch gekennzeichnet,**
**dass** die Auswerteeinheit die umgeformten Abtastwerte des Quadratur-Signalpfads und des Inphase-Signalpfads jeweils quadriert, aufaddiert und mit einem Schwellwert vergleicht.

**7.** Schaltung nach einem der vorhergehenden Ansprüche,
**dadurch gekennzeichnet,**
**dass** die Mischstufe die Folge der Abtastwerte mit einem Mischfrequenzsignal multipliziert, dessen Frequenz der Frequenz der zu detektierenden Wechselspannungsimpulse entspricht.

**8.** Schaltung nach einem der Ansprüche 1 bis 6,
**dadurch gekennzeichnet,**
**dass** die Schaltung eine erste Mischstufe (4, 5) aufweist, welche die Folge der Abtastwerte mit einem ersten Mischfrequenzsignal multipliziert, dessen Frequenz $f_{M1}$ der Frequenz eines ersten Typs von Wechselspannungsimpulsen entspricht, und dass die Schaltung eine zwischen der ersten Mischstufe (4, 5) und der Auswerteeinheit angeordnete zweite Mischstufe (12, 21) aufweist, welche die Folge der Abtastwerte mit einem zweiten Mischfrequenzsignal multipliziert, dessen Frequenz $f_{M2}$ der Differenz der Frequenzen des ersten Typs und eines zweiten Typs von Wechselspannungsimpulsen entspricht.

**9.** Schaltung nach Anspruch 8,
**dadurch gekennzeichnet,**
**dass** zwischen der ersten Mischstufe (4, 5) und der zweiten Mischstufe (12, 21) eine Tiefpassstufe (8, 9) angeordnet ist, deren Grenzfrequenz oberhalb der Differenzfrequenz liegt.

**10.** Schaltung nach einem der vorhergehenden Ansprüche,
**dadurch gekennzeichnet,**
**dass** es sich bei den Wechselspannungsimpulsen um Gebühreneinheitensignale des Fernsprechnetzes handelt.

**11.** Fernsprechgerät, welches eine Schaltung nach einem der Ansprüche 1 bis 10 zur Erkennung von Gebühreneinheitensignalen aufweist.

**12.** Fernsprechgerät nach Anspruch 11,
**dadurch gekennzeichnet,**
**dass** die Gebühreneinheitensignale über den Sprachpfad, über den auch die Audio-Signalverarbeitung erfolgt, detektiert werden.

**13.** Fernsprechgerät nach Anspruch 11 oder Anspruch 12,
**dadurch gekennzeichnet,**
**dass** die Gebühreneinheitensignale durch die Analog/Digital-Wandlereinheit (A/D) des Sprachpfads digitalisiert werden.

**14.** Fernsprechgerät nach einem der Ansprüche 11 bis 13,
**dadurch gekennzeichnet,**
**dass** die verschiedenen Stufen zur Umformung der Folge von Abtastwerten mittels eines oder mehrerer digitaler Signalprozessoren realisiert sind.

**15.** Verfahren zur Erkennung verschiedener Typen von Wechselspannungsimpulsen von jeweils definierter Frequenz,
**gekennzeichnet durch** folgende Schritte:

     a) Digitalisieren des Eingangssignals (1) in eine Folge von digitalisierten Abtastwerten ($x(k)$) ;
     b) Umformen der Folge von Abtastwerten ($x(k)$) **durch** eine beliebige Abfolge von Schritten des

     -    Multiplizierens der Folge von Abtastwerten mit vorgegebenen Mischfrequenzsignalen; und des
     -    Filterns der Folge von Abtastwerten zur Festlegung des erlaubten Zwischenfrequenzbands;

c) Ermitteln, anhand der Folge von umgeformten Abtastwerten, ob ein bestimmter Typ von Wechselspannungsimpuls vorliegt.

16. Verfahren nach Anspruch 15,
**dadurch gekennzeichnet,**
**dass** beim Umformen der Folge von Abtastwerten die Signalrate ($f_s$) reduziert wird, indem die Zahl der Abtastwerte verringert wird.

17. Verfahren nach Anspruch 15 oder Anspruch 16,
**dadurch gekennzeichnet,**
**dass** die umgeformten Abtastwerte zur Ermittlung, ob ein Wechselspannungsimpuls vorliegt, quadriert, aufaddiert und mit einem Schwellwert verglichen werden.

18. Verfahren nach einem der Ansprüche 15 bis 17,
**dadurch gekennzeichnet,**
**dass** die Folge von Abtastwerten mit einem Mischfrequenzsignal multipliziert wird, dessen Frequenz der Frequenz der zu detektierenden Wechselspannungsimpulse entspricht.

19. Verfahren nach einem der Ansprüche 15 bis 17,
**dadurch gekennzeichnet,**
**dass** die Folge von Abtastwerten zuerst mit einem ersten Mischfrequenzsignal multipliziert wird, dessen Frequenz $f_{M1}$ der Frequenz eines ersten Typs von Wechselspannungsimpulsen entspricht, und später mit einem zweiten Mischfrequenzsignal multipliziert wird, dessen Frequenz $f_{M2}$ der Differenz der Frequenzen des ersten und eines zweiten Typs von Wechselspannungsimpulsen entspricht.

20. Verfahren nach einem der Ansprüche 15 bis 19,
**dadurch gekennzeichnet,**
**dass** es sich bei den Wechselspannungsimpulsen um Gebühreneinheitensignale des Fernsprechnetzes handelt.

## Claims

1. Circuit for detection of AC voltage pulses at a defined frequency, which has

   - an analogue/digital converter unit (A/D) for converting an input signal (1) to a sequence of sample values (x(k)),
   - at least one mixing stage, (4, 5 as well as 12, 21), which multiplies the sequence of sample values (x(k)) by a mixing frequency signal,
   - at least one filter stage (13, 14, 22) for defining the permissible intermediate frequency band, and
   - an evaluation unit which uses the converted sample values to determine whether an AC voltage pulse is present.

2. Circuit according to Claim 1,
**characterized**
**in that** the circuit has at least one decimation stage (6, 7, 10, 11, 15, 16, 23) which reduces the signal rate ($f_s$) by omitting sample values.

3. Circuit according to Claim 1 or Claim 2,
**characterized**
**in that** the mixing stage or the mixing stages (4, 5 and 12, 21) each has or have a quadrature signal path (2) and an in-phase signal path (3), with the sequence of samples values being multiplied by the sine signal at the mixing frequency in the quadrature signal path (2), and with the sequence of sample values being multiplied by the cosine signal at the mixing frequency in the inphase signal path (3).

4. Circuit according to Claim 3,
**characterized**
**in that** the multiplication by the sine signal at the mixing frequency is carried out by multiplication of the sequence of sample values by the sequence 0, 1, 0, -1, 0, ... .

5. Circuit according to Claim 3 or Claim 4,
**characterized**
**in that** the multiplication by the cosine signal at the mixing frequency is carried out by multiplication of the sequence of sample values by the sequence 1, 0, -1, 0, 1, ... .

6. Circuit according to one of Claims 3 to 5,
**characterized**
**in that** the evaluation unit in each case squares, adds and compares with a threshold value the converted sample values in the quadrature signal path and in the in-phase signal path.

7. Circuit according to one of the preceding claims,
**characterized in that** the mixing stage multiplies the sequence of sample values by a mixing frequency signal, whose frequency corresponds to the frequency of the AC voltage pulses to be detected.

8. Circuit according to one of Claims 1 to 6,
**characterized**
**in that** the circuit has a first mixing stage (4, 5) which multiplies the sequence of sample values by a first mixing frequency signal, whose frequency $f_{M1}$ corresponds to the frequency of a first type of AC voltage pulses, and in that the circuit has a second mixing stage (12, 21), which is arranged between the first mixing stage (4, 5) and the evaluation unit and multiplies the sequence of samples values by a second mixing frequency signal, whose frequency $f_{M2}$ corresponds to the difference between the frequencies of the first type and of a second type of AC voltage pulses.

9. Circuit according to Claim 8, **characterized in that** a low-pass filter stage (8, 9), whose cut-off frequency is above the difference frequency, is arranged between the first mixing stage (4, 5) and the second mixing stage (12, 21).

10. Circuit according to one of the preceding claims, **characterized in that** the AC voltage pulses are charge unit signals in the telephone network.

11. Telephone, which has a circuit according to one of Claims 1 to 10 for identifying charge unit signals.

12. Telephone according to Claim 11, **characterized in that** the charge unit signals are detected via the speech path via which the audio signal processing is also carried out.

13. Telephone according to Claim 11 or Claim 12, **characterized in that** charge unit signals are digitized by means of the analogueue/digital converter unit (A/D) in the speech path.

14. Telephone according to one of Claims 11 to 13, **characterized in that** the various stages for converting the sequence of sample values are formed by one or more digital signal processors.

15. Method for identifying different types of AC voltage pulses, each at a defined frequency, **characterized by** the following steps:

    a) digitization of the input signal (1) to form a sequence of digitized sample values (x(k));
    b) conversion of the sequence of sample values (x(k)) by means of any desired sequence of steps comprising

    - multiplication of the sequence of sample values by predetermined mixing frequency signals; and
    - filtering of the sequence of sample values in order to define the permissible intermediate frequency band;

    c) using the sequence of converted sample values to determine whether a specific type of AC voltage pulse is present.

16. Method according to Claim 15,

**characterized in that**, during the conversion of the sequence of sample values, the signal rate ($f_s$) is reduced by reducing the number of sample values.

17. Method according to Claim 15 or Claim 16, **characterized in that** the converted sample values are squared, added and compared with a threshold value in order to determine whether an AC voltage pulse is present.

18. Method according to one of Claims 15 to 17, **characterized in that** the sequence of sample values is multiplied by a mixing frequency signal, whose frequency corresponds to the frequency of the AC voltage pulses to be detected.

19. Method according to one of Claims 15 to 17, **characterized in that** the sequence of sample values is first of all multiplied by a first mixing frequency signal, whose frequency $f_{M1}$ corresponds to the frequency of a first type of AC voltage pulses, and is later multiplied by a second mixing frequency signal, whose frequency $f_{M2}$ corresponds to the difference between the frequencies of the first and of a second type of AC voltage pulses.

20. Method according to one of Claims 15 to 19, **characterized in that** the AC voltage pulses are charge unit signals in the telephone network.

**Revendications**

1. Circuit de détection d'impulsions en tension alternative de fréquence définie, qui comporte

    - une unité (A/D) de convertisseur analogique/numérique de conversion d'un signal (1) d'entrée en une suite de valeurs (x(k)) d'échantillonnage ;
    - au moins un étage (4, 5 ainsi que 12, 21) mélangeur, qui multiplie la suite de valeurs (x(k)) d'échantillonnage par un signal de fréquence de mélange ;
    - au moins un étage (13, 14, 22) de filtrage pour fixer la bande de fréquence intermédiaire permise ; ainsi que
    - une unité d'évaluation qui détermine au moyen des valeurs d'échantillonnage converties s'il y a une impulsion en tension alternative.

2. Circuit suivant la revendication 1, **caractérisé**

**en ce que** le circuit comporte au moins un étage (6, 7, 10, 11, 15, 16, 23) de décimation qui diminue la fréquence ($f_s$) du signal en omettant des valeurs d'échantillonnage.

3. Circuit suivant la revendication 1 ou 2,
**caractérisé**
**en ce que** l'étage mélangeur ou les étages mélangeurs (4, 5 ainsi que 12, 21) ont, respectivement, un trajet de signal (2) en quadrature ainsi qu'un trajet de signal (3) en phase, une multiplication de la suite des valeurs d'échantillonnage par le signal sinus de la fréquence de mélange étant effectuée dans la trajet de signal (2) en quadrature, tandis qu'une multiplication de la suite des valeurs d'échantillonnage par le signal cosinus de la fréquence de mélange est effectuée dans le trajet de signal (3) en phase.

4. Circuit suivant la revendication 3,
**caractérisé**
**en ce que** la multiplication par le signal sinus de la fréquence de mélange s'effectue en multipliant la suite des valeurs d'échantillonnage par la suite 0, 1, 0, -1, 0, ...

5. Circuit suivant la revendication 3 ou la revendication 4,
**caractérisé**
**en ce que** la multiplication par le signal cosinus de la fréquence de mélange s'effectue en multipliant la suite des valeurs d'échantillonnage par la suite 1, 0, -1, 0, 1, ...

6. Circuit suivant l'une des revendications 3 à 5,
**caractérisé**
**en ce que** l'unité d'évaluation porte au carré les valeurs d'échantillonnage converties du trajet de signal en quadrature et du trajet de signal en phase, les additionne et les compare à une valeur de seuil.

7. Circuit suivant l'une des revendications précédentes,
**caractérisé**
**en ce que** l'étage mélangeur multiplie la suite des valeurs d'échantillonnage par un signal de fréquence de mélange dont la fréquence correspond à la fréquence des impulsions en tension alternative à détecter.

8. Circuit suivant l'une des revendications 1 à 6,
**caractérisé**
**en ce que** le circuit a un premier étage (4, 5) mélangeur qui multiplie la suite des valeurs d'échantillonnage par un premier signal de fréquence de mélange dont la fréquence $f_{M1}$ correspond à la fréquence d'un premier type d'impulsion en tension alternative et en ce que le circuit a un deuxième étage (12, 21) mélangeur disposé entre le premier étage (4, 5) mélangeur et l'unité d'évaluation qui multiplie la suite des valeurs d'échantillonnage par un deuxième signal de fréquence de mélange dont la fréquence $f_{M2}$ correspond à la différence entre les fréquences du premier type et d'un deuxième type d'impulsion en tension alternative.

9. Circuit suivant la revendication 8,
**caractérisé**
**en ce qu'**il est monté entre le premier étage (4, 5) mélangeur et le deuxième étage (12, 21) mélangeur un étage (8, 9) passe-bas dont la fréquence limite est supérieure à la fréquence de différence.

10. Circuit suivant l'une des revendications précédentes,
**caractérisé**
**en ce que** les impulsions en tension alternative sont des signaux d'unités de taxation du réseau téléphonique.

11. Appareil téléphonique qui a un circuit suivant l'une des revendications 1 à 10 pour détecter des signaux d'unités de taxation.

12. Appareil téléphonique suivant la revendication 11,
**caractérisé**
**en ce que** les signaux d'unités de taxation sont détectés par la voie phonique par laquelle s'effectue aussi le traitement du signal audio.

13. Appareil téléphonique suivant la revendication 11 ou la revendication 12,
**caractérisé**
**en ce que** les signaux d'unités de taxation sont numérisés par l'unité (A/D) de convertisseur analogique/numérique de la voie phonique.

14. Appareil téléphonique suivant l'une des revendications 11 à 13,
**caractérisé**
**en ce que** les divers étages de conversion de la suite de valeurs d'échantillonnage sont réalisés au moyen d'un ou de plusieurs processeurs de signal numériques.

15. Procédé de détection de divers types d'impulsions en tension alternative d'une fréquence, respectivement, définie,
**caractérisé par** les stades suivants :

a) on numérise le signal (1) d'entrée en une suite de valeurs ($x(k)$) d'échantillonnage numérisées ;
b) on convertit la suite de valeurs ($x(k)$) d'échantillonnage par une succession quelconque des stades de

- multiplication de la suite de valeurs d'échantillonnage par des signaux de fréquence de mélange prescrits ; et du
- filtrage de la suite des valeurs d'échantillonnage pour fixer la bande de fréquence intermédiaire autorisée ;

c) on détermine au moyen de la suite de valeurs d'échantillonnage converties s'il y a un type déterminé d'impulsion en tension alternative.

16. Procédé suivant la revendication 15,
    **caractérisé**
    **en ce que**, lors de la conversion de la suite de valeurs d'échantillonnage, on réduit la fréquence ($f_s$) du signal en diminuant le nombre des valeurs d'échantillonnage.

17. Procédé suivant la revendication 15 ou la revendication 16,
    **caractérisé**
    **en ce que** l'on porte au carré, on additionne et on compare à un seuil les valeurs d'échantillonnage converties pour déterminer s'il y a une impulsion en tension alternative.

18. Procédé suivant l'une des revendications 15 à 17,
    **caractérisé**
    **en ce que** l'on multiplie la suite des valeurs d'échantillonnage par un signal de fréquence de mélange dont la fréquence correspond à la fréquence des impulsions en tension alternative à détecter.

19. Procédé suivant l'une des revendications 15 à 17,
    **caractérisé**
    **en ce que** l'on multiplie la suite de valeurs d'échantillonnage d'abord par un premier signal de fréquence de mélange dont la fréquence $f_{M1}$ correspond à la fréquence d'un premier type d'impulsion en tension alternative et ensuite par un deuxième signal de fréquence de mélange dont la fréquence $f_{M2}$ correspond à la différence entre les fréquences du premier type et d'un deuxième type d'impulsion en tension alternative.

20. Procédé suivant l'une des revendications 15 à 19,
    **caractérisé**
    **en ce que** les impulsions en tension alternative sont des signaux d'unités de taxation du réseau téléphonique.

Fig.1

EP 1 332 607 B1